# EUROPÄISCHE PATENTSCHRIFT

(11) **EP 3 126 026 B1**
(45) Veröffentlichungstag und Bekanntmachung des Hinweises auf die Patenterteilung: **12.06.2019**
(21) Anmeldenummer: 15714220.9
(22) Anmeldetag: 02.04.2015
(51) Int. Cl.: A63G 7/00, F16D 55/226, F16D 63/00

(54) **VERGNÜGUNGSPARKVORRICHTUNG MIT EINEM SCHIENENGEFÜHRTEN STRECKENVERLAUF SOWIE MIT MINDESTENS EINEM AN DER SCHIENE GEFÜHRTEN FAHRZEUG**
AMUSEMENT-PARK DEVICE HAVING A RAIL-GUIDED ROUTE COURSE AND HAVING AT LEAST ONE VEHICLE GUIDED ON THE RAIL
DISPOSITIF DE DIVERTISSEMENT COMPORTANT UN CIRCUIT SUR RAIL ET AU MOINS UN VÉHICULE GUIDÉ SUR RAIL

(30) Priorität: 02.04.2014 DE 102014104659
(43) Veröffentlichungstag der Anmeldung: 08.02.2017
(73) Patentinhaber: Mack Rides GmbH & Co. KG, 79183 Waldkirch (DE)
(72) Erfinder: MARKUS, Becherer, 79215 Elzach Prechtal (DE); LÄSSLE, Timo, 77966 Kappel-Grafenhausen (DE)
(74) Vertreter: Westphal, Mussgnug & Partner Patentanwälte mbB
(86) Internationale Anmeldenummer: PCT/EP2015/057356
(87) Internationale Veröffentlichungsnummer: WO 2015/150539

(56) Entgegenhaltungen:
- AT-B- 82 624
- CN-U- 202 569 471
- DE-A1-102009 015 529
- DE-U1- 29 980 001
- DE-U1-202011 107 776
- US-A1- 2004 099 492

## Beschreibung

Die Erfindung betrifft eine Vergnügungsparkvorrichtung mit einem schienengeführten Streckenverlauf sowie mit mindestens einem an der Schiene geführten Fahrzeug, das eine Bremseinrichtung mit wenigstens einer, vorzugsweise zwei an einem Bremsbackenträger befestigte Bremsbacken aufweist zum Bremsen bzw. Festklemmen des Fahrzeugs an einer Stelle des schienengeführten Streckenverlaufs im Bremsfall.

Eine Vergnügungsparkvorrichtung ist aus DE 10 2009 015 529 A1 bekannt. Eine andere Vergnügungsparkvorrichtung ist aus DE 299 80 001 U1 bekannt.

Solche Vergnügungsparkvorrichtungen mit schienengeführten Streckenverläufen sind bereits seit vielen Jahren in Benutzung. Dabei ist neben der Frage, wie die Fahrzeuge auf den Schienen angetrieben werden, auch ein wichtiger Sicherheitsaspekt, eine geeignete Bremseinrichtung bereitzustellen, um die Fahrzeuge im Betrieb sicher abbremsen beziehungsweise zum Stehen bringen zu können.

Unterschiedlichste Bremskonzepte sind bei solchen Vergnügungsparkeinrichtungen, wie z. B. Karussellbahnen Achterbahnen oder Schienenzügen, bekannt geworden. Eine der ersten Bremseinrichtungen bei solchen Vergnügungsparkvorrichtungen ist von Thompson in AT 82624 aus dem Jahr 1921 geschrieben wurden. Thompson beschreibt darin einen Bremsmechanismus, der es ermöglicht, die Geschwindigkeit der Fahrzeuge zu kontrollieren und das Fahrzeug in kritischen Situationen komplett zu stoppen. Thompson beschreibt eine Fahrzeugbremse, die von einer Person im Zug über einen Hebel betätigt wurde. Ein Mechanismus presst dabei Bremsbacken auf eine entlang der gesamten Schiene installierten Reibplanke. Aufgrund der dabei entstehenden Reibung wird ein Teil der Bewegungsenergie des Zuges in Wärme umgesetzt und der Zug wird langsamer. Diese Bremstechnik wird allerdings nur noch auf wenigen gleisgeführten Streckenverläufen, wie z. B. der sogenannten "Rutschebanen" im Tivoli (Kopenhagen, Dänemark), eingesetzt.

Bei den heutigen Karussells und Achterbahnen findet ein anderer Bremsmechanismus Anwendung. Die Bremsmechanik ist dabei vom Fahrzeug weg auf den Schienenparcours verlegt. Ein am Fahrzeug befindliches, sogenanntes Bremsschwert greift in Bremsbacken von Reibbremsen, wobei die Bremsbacken an bestimmten Stationen des Karussells oder der Achterbahn an der Schiene platziert sind. Passiert ein Fahrzeug mit seinem Bremsschwert solche Reibbremsen, taucht das Schwert zwischen die Bremsbacken dieser Reibbremsen ein und wird dort, sofern die Bremse aktiviert ist, festgeklemmt. Die Bremsen werden dabei regelmäßig durch pneumatische oder hydraulische Aktoren gegen eine Federvorspannkraft geöffnet.

Ab Mitte der 90er Jahre wurden dann die sogenannte Wirbelstrombremsen als magnetische Variante solcher an den Schienen befestigten Bremssysteme eingesetzt. Ein Beispiel einer solchen Wirbelstrombremse bei Achterbahnen zeigt die DE 20 2012 100 896 U1.

Wenngleich, wie oben gezeigt, die Entwicklung von Bremseinrichtungen bei Karussells und Achterbahnen zu sehr wirksamen und effektiven Bremseinrichtungen geführt hat, sind diese insoweit nachteilig, als dass die Fahrzeuge nicht an beliebigen Streckenpunkten des Schienenverlaufs gebremst und angehalten werden können, sondern lediglich in den Abschnitten bzw. Blöcken, an denen solche Bremseinrichtungen tatsächlich auch an der Schiene montiert sind. Eine Rückkehr zu einem Bremsmechanismus, der am Fahrzeug solcher Vergnügungsparkvorrichtungen befestigt ist, scheiterte jedoch daran, dass die Schienenführung von Achterbahnen häufig extreme Kurven aufweist, und zudem Unebenheiten und Toleranzen in der Streckenführung auftreten, so dass herkömmliche am Fahrzeug befindliche Bremseinrichtungen nicht einsetzbar waren.

Hier setzt die vorliegende Erfindung an.

Die vorliegende Erfindung hat das Ziel, eine Vergnügungsparkvorrichtung der eingangs genannten Art bereitzustellen, bei denen am Fahrzeug selbst eine wirksame und effektive Bremseinrichtung befestigt ist, so dass die Fahrzeuge an beliebiger Stelle des schienengeführten Streckenverlaufes abgebremst und angehalten werden können.

Dieses Ziel wird durch eine Vergnügungsparkvorrichtung mit den Merkmalen des Anspruchs 1 gelöst.

Weiterbildungen der Erfindung sind Gegenstand der Unteransprüche.

zum feststehenden Bremsträger und damit zum Fahrzeug verschwenkbar sind.

Durch das Vorsehen der Schwenkmittel ist es in einfacher Weise möglich, dass die Bremseinrichtung auch enge Kurven in Achterbahnen sowie Unebenheiten und Toleranzen in der Schienenführung ausgleichen kann.

In einer Ausführungsform sind die Schwenkmittel derart gestaltet, dass der Bremsbackenträger parallel zur Schiene auf dem schienengeführten Streckenverlauf verschwenkbar ist. Parallel zur Schiene bedeutet dabei, dass der Bremsbackenträger sowohl um einen vorgegebenen Winkel in Fahrtrichtung des Fahrzeuges nach vorn, aber auch nach hinten verschwenkt werden kann.

Es hat sich dabei als günstig herausgestellt, dass der Bremsbackenträger um mindestens +/- 5° bis +/- 15° in und entgegengesetzt zur Fahrtrichtung des Fahrzeuges auf dem schienengeführten Streckenverlauf verschwenkbar ist.

In einer Ausführungsform der Erfindung ist zum Verschwenken des Bremsbackenträgers ein Schwenkbolzen vorgesehen, der auf dem oder an dem Bremsträger, der mit dem Fahrzeug feststehend verbunden ist, ebenfalls feststehend verbunden ist. Der Schwenkbolzen weist hierfür eine zylindrische Außenkontur mit einem umlaufenden und hervorspringenden Flansch auf. Der Bremsbackenträger umgreift dabei den umlaufenden Flansch ringförmig und ist über einen Gleitring an der zylindrischen Außenkontur des Schwenkbolzens verdrehbar gelagert.

Um das Verschwenken des Bremsbackenträgers in Fahrtrichtung nach vorn und hinten zu begrenzen, ist in einer Weiterbildung der Erfindung am Bremsträger ein erster Anschlag und ein zweiter Anschlag vorgesehen, an welchen ein Anschlagsbolzen des Bremsbackenträgers entsprechend des vorgegebenen, maximalen Verschwenkwinkels anschlägt.

Zwischen dem erwähnten ersten Anschlag und zweiten Anschlag einerseits und dem Anschlagbolzen andererseits können insbesondere zur Geräuschreduzierung geeignete Pufferelemente, zum Beispiel Gummipuffer, vorgesehen sein.

Die schwimmende Lagerung gemäß Anspruch 1 kann beispielsweise dadurch realisiert werden, dass sowohl am ersten Bremszangenteil als auch durch am zweiten Bremszangenteil jeweils federgelagerte Bolzen als Führungen vorgesehen sind, wobei diese Bolzen an der Bremszangenkonsole gehalten werden.

In einer Ausführungsform der Erfindung sind sowohl das erste Bremszangenteil als auch das zweite Bremszangenteil jeweils mit einem Gleitelement bzw. Halteelement versehen, an dem die erste und zweite Bremsbacke jeweils befestigt sind. Jedes dieser, im Folgenden Halteelement genannten Teile, weist auf seiner zur jeweiligen Bremsbacke abgewandten Hauptfläche eine gewölbte Außenkontur auf, welche formschlüssig mit einem zweiten Gleitelement bzw. Halteelement, das am jeweiligen Bremszangenteil festgelegt ist, beispielsweise durch Schrauben, derart korrespondiert, dass die jeweilige Bremsbacke schwenkend gelagert ist. Die erwähnte gewölbte Außenkontur ist dabei vorzugsweise so gewählt, dass sich die Bremsbacken jeweils quer zur Schienenführung und damit auch quer zur Fahrtrichtung des Fahrzeuges nach links und rechts verschwenken, also gleiten können. Praktische Versuche haben ergeben, dass dabei die beiden Bremsbacken quer zur Fahrtrichtung des Fahrzeuges in einem Winkel von etwa +/- 1° bis etwa +/- 5° verschwenkbar sein sollen, um eine optimale Anpassung der Bremsbacken an Unebenheiten der Schienenführung zu gewährleisten.

Bei der vorliegenden Erfindung ist es möglich, dass die beiden Bremsbacken im Ruhezustand der Bremseinrichtung und damit bei geöffneter Bremseinrichtung einen Abstand von > 10 mm, vorzugsweise sogar > etwa 30 mm, zueinander aufweisen. Bei herkömmlichen Bremseinrichtungen mit Bremsbacken sind diese Abstände deutlich geringer, nämlich in der Regel geringer als 10 mm.

Zum Verstellen der Bremsbacken, das heißt zum Aufeinanderzubewegen der Bremsbacken, können zwar prinzipiell beliebige Verstelleinrichtungen vorgesehen werden. Bei der erfindungsgemäßen Einrichtung bietet es sich jedoch an, eine der beiden Bremsbacken - bis auf das erwähnte Schwenken um wenige Gradaxial feststehend am Bremsbackenträger zu fixieren und nur die gegenüberliegende Bremsbacke mit einer geeigneten Verstelleinrichtung zu verstellen. Als Verstelleinrichtung kommen prinzipiell beliebige Verstelleinrichtungen in Betracht. Besonders zweckmäßig sind jedoch hydraulische, pneumatische oder elektromagnetische Verstelleinheiten.

Die vorliegende Erfindung wird anhand mehrerer Figuren im Zusammenhang mit einem konkreten Ausführungsbeispiel eine Bremseinrichtung näher erläutert. Es zeigen:
- Fig. 1: eine perspektivische Ansicht einer Bremseinrichtung, wie diese an schienengeführten Fahrzeugen in Vergnügungsparkvorrichtungen montierbar ist,
- Fig. 2: eine Frontansicht auf die Bremseinrichtung von Figur 1 mit Blick auf die Klemmseite der Bremsbacken,
- Fig. 3: eine Schnittansicht entlang der Schnittlinie A-A von Figur 2, und
- Fig. 4: die Bremseinrichtung der Figuren 1 bis 3, wiederum mit Blick auf deren Vorderseite (Klemmseite), allerdings im verschwenkten Zustand des Bremsbackenträgers.

In den nachfolgenden Figuren bezeichnen, sofern nicht anders angegeben, gleiche Bezugszeichen gleiche Teile mit gleicher Bedeutung.

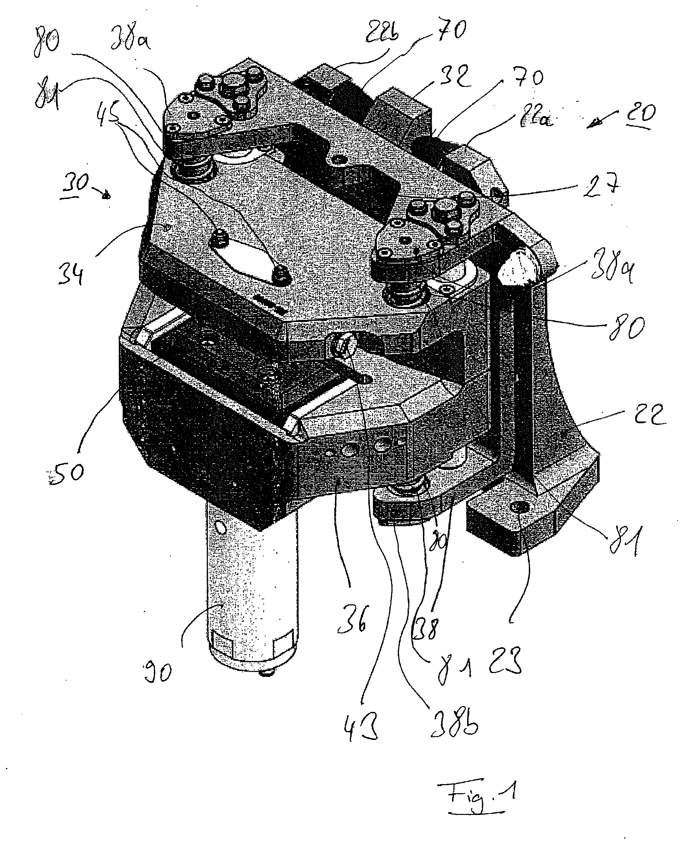

In den Figuren 1 bis 3 ist eine Bremseinrichtung dargestellt, wie sie in schienengeführten Fahrzeugen von Vergnügungsparkeinrichtungen, insbesondere Achterbahnen oder ähnlichen, eingesetzt wird. Dabei zeichnet sich die Bremseinrichtung durch zwei Besonderheiten aus, die im Nachfolgenden im Detail erläutert werden. Die eine Besonderheit besteht darin, dass die Bremseinrichtung Schwenkmittel aufweist, um dort eingesetzte Bremsbacken optimal an die schienengeführte Streckenführung, die auch Toleranzen und Unebenheiten haben kann, anzupassen. Die zweite Besonderheit besteht darin, die Bremsbacken im Ruhezustand der Bremseinrichtung verhältnismäßig weit zueinander beabstandet sind, so dass selbst bei Ungenauigkeiten und Toleranzen in der Streckenführung der Schiene nicht ungewollte Reibungsverluste auftreten, indem die Bremsbacken ungewollt an der Schiene anstehen und dort reiben.

Die Bremseinrichtung in den Figuren 1 bis 3 weist einen plattenförmigen Bremsträger 22 auf, welcher an seinem unteren Ende im Schnitt gesehen T-förmig endet und dort Bohrungen 23 aufweist. Diese Bohrungen 23 im Bremsträger 22 dienen zur Befestigung des Bremsträgers 22 am Fahrzeug, beispielsweise mittels Schrauben. Der Bremsträger 22 ist deshalb mit dem Fahrzeug, das bei Vergnügungsparkvorrichtungen, wie Achterbahnen, an der Schiene geführt wird, feststehend verbunden. Auf dem den Bohrungen 23 gegenüberliegenden Ende des Bremsträgers 22, das heißt bei der in den Figuren 1 bis 3 gezeigten Ansichten jeweils oben, endet der Bremsträger 22 mit zwei zueinander beabstandeten Höckern oder Anschlägen 22a und 22b. An jedem dieser Anschläge 22a, 22b sitzt ein noch zu erläuterndes Pufferelement 70 derart angeordnet, dass jeweils das zu dem Anschlag 22a gehörende Pufferelement 70 in Richtung des gegenüberliegenden Anschlagelementes 22b mit dem dort sitzenden Pufferelement 70 zeigt.

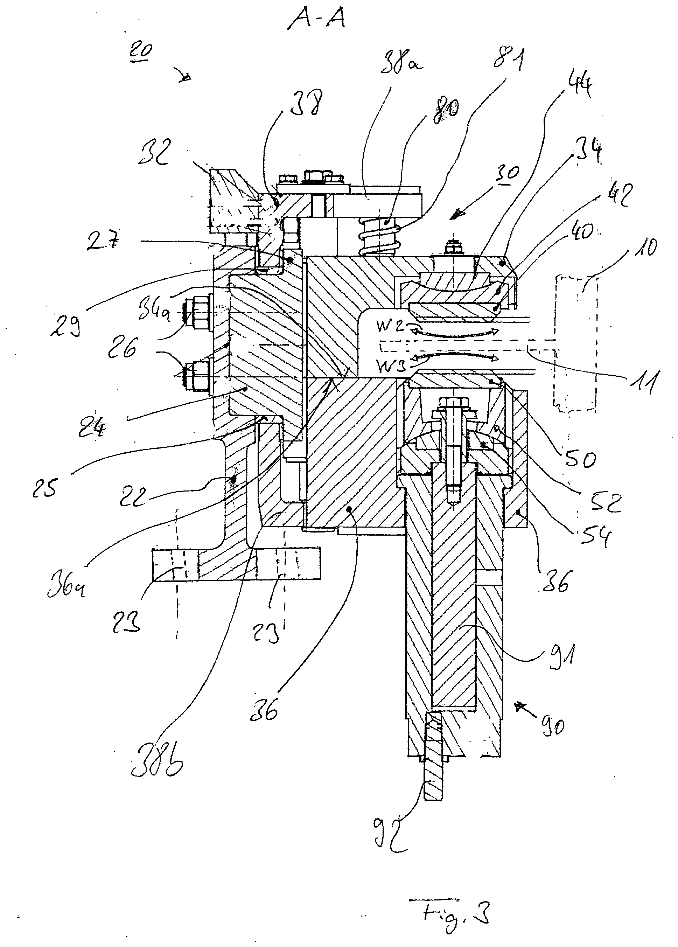

An die in Figur 3 rechts befindliche Hauptfläche des Bremsträgers 22 ist eine scheibenförmige Vertiefung eingearbeitet, in der ein Schwenkbolzen 24 formschlüssig eingreift. Dieser Schwenkbolzen 24 ist über Schrauben 26 an dem Bremsträger 22 festgeschraubt und damit im fertig montierten Zustand feststehend mit dem Bremsträger 22 verbunden. Der Schwenkbolzen 24 verfügt über eine zylindrische Außenkontur 25, welche über die in Figur 3 rechts dargestellte Hauptfläche des Bremsträgers 22 deutlich hinausragt und mit einem ringförmig am äußeren Umfang hervorspringenden Flansch 27 abschließt. Zwischen diesem ringförmigen Flansch 27 des Schwenkbolzens 24 und dem Bremsträger 22 sitzt ein Gleitring 29 auf der zylindrischen Außenkontur 25 des Schwenkbolzens 24.

Die Bremseinrichtung 20 verfügt darüber hinaus über einen Bremsbackenträger 30, der um diesen Schwenkbolzen 26 herum verschwenkbar ist. Hierfür verfügt der Bremsbackenträger 30, an dem in noch zu erläuternder Art und Weise zwei Bremsbacken 40, 50 befestigt sind, über eine Bremszangenkonsole 38, die im Schnittbild von Figur 3 gesehen C-förmig gestaltet ist und mit ihrem Mittenteil, in dem eine Öffnung vorhanden ist, den Flansch 27 des Schwenkbolzens 24 übergreift und dort am Gleitring 29 aufliegt. Die Bremszangenkonsole 38 kann folglich durch diese Gestaltung um den Schwenkbolzen 24 herum drehen. Um dabei den Verschwenkwinkel der Bremszangenkonsole 38 zu begrenzen, verfügt die Bremszangenkonsole 38 an ihrem oberen Ende über einen Anschlagbolzen 32, welcher zwischen die beiden erwähnten Pufferelemente 70 greift. Durch den Abstand der beiden Anschläge 22a und 22b des Bremsträgers 22 einerseits und die Breite des Anschlagbolzens 32 andererseits sowie die Dimensionierung der Pufferelemente 70 ist der maximale Verschwenkwinkel W1ₘₐₓ der Bremszangenkonsole 38 und damit des Bremsbackenträgers 30 festgelegt.

Wie besonders gut in der perspektivischen Darstellung von Figur 1 und in der Schnittdarstellung von Figur 3 erkennbar ist, verfügt die Bremszangenkonsole 38 über zwei obere Arme 38a, die sich vom Bremsträger 22 nach rechts (vergleiche die Schnittdarstellung von Figur 3) wegerstrecken und über zwei untere Arme 38b, die sich ebenfalls vom Bremsträger 22 wegerstrecken.

Zwischen diesen oberen Armen 38a und unteren Armen 38b der Bremszangenkonsole 38 ist eine Bremszange in Form eines oberen ersten Bremszangenteils 34 und eines unteren zweiten Bremszangenteils 36 platziert. Die beiden Bremszangenteile 34, 36 sind über zwei Bolzen 80 geführt, wobei die Bolzen 80 an den erwähnten oberen Armen 38a und unteren Armen 38b der Bremszangenkonsole 38 feststehend, zum Beispiel über geeignete Schrauben, verbunden sind. Um jeden dieser insgesamt zwei Bolzen 80 sind Federn 81, zum Beispiel Schraubenfedern, geführt. Die beiden Bremszangenteile 34, 36, die mindestens annähernd L-förmig gestaltet sind werden von den Federn 81 in ihrer schwimmenden Lage fixiert. Die Anlageflächen der Bremszangenteile 34, 36 sind mit den Bezugszeichen 34a, 36a beziffert.

Die jeweils um die Bolzen 80 geführten Druckfedern 81 sorgen insgesamt für eine schwimmende Lagerung der beiden Bremszangenteile 34, 36. Dies bedeutet, dass bei Belastung die beiden Bremszangenteile 34, 36 gemeinsam nach oben oder unten ausweichen können, so dass eine axiale Bewegung der beiden Bremszangenteile 34, 36 ermöglicht ist.

Das erste Bremszangenteil 34, das im dargestellten Ausführungsbeispiel das obere Bremszangenteil 34 ist, haltert in einer wannenförmigen Vertiefung an seinem in Figur 3 rechts dargestellten Ende die erste Bremsbacke 40, die plattenförmig ausgebildet ist. Die erste Bremsbacke 40 ist hierfür mit einem ersten Halteelement 42 verbunden, beispielsweise über geeignete Schrauben (nicht gezeigt). Dieses erste Halteelement 42 weist eine gewölbte Außenkontur auf ihrer der Bremsbacke 40 abgewandten oberen Seite auf, wie insbesondere Figur 3 besonders deutlich zeigt. Diese gewölbte Außenkontur des ersten Halteelementes 42 korrespondiert mit einer entsprechenden Wölbung an einem zweiten Halteelement 44. Dieses zweite Halteelement 44 ist über Schrauben 45 an dem ersten Bremszangenteil 34 festgeschraubt. Das erste Halteelement 42 ist mit dem zweiten Halteelement 44 über seitlich eingeführte Schrauben 43 verbunden, derart, dass eine Kippbewegung des ersten Halteelementes 42 in Bezug zum zweiten Halteelement 44 um einen Winkel W2, wie er in Figur 3 angedeutet ist, möglich ist. Dieser Winkel W2 kann von +/- 1° bis etwa +/- 5° gewählt sein, wodurch die erste Bremsbacke 40 seitlich um den erwähnten Winkel hin- und herschwenken kann.

Das zweite Bremszangenteil 36 weist ebenfalls eine wannenartige Vertiefung auf, die jedoch tiefer gestaltet ist als die Ausnehmung in dem ersten Bremszangenteil 34. Aus dieser Ausnehmung des zweiten Bremszangenteils 36 ragt die zweite Bremsbacke 50, welche über ein erstes, topfförmiges Halteelement 52 an einem zweiten Halteelement 54 befestigt ist, mit ihrem Reibbelag heraus. Das erste Halteelement 52 weist wiederum eine hohlwandige, gewölbte Außenkontur auf, welche mit einer entsprechenden gewölbten Außenkontur des zweiten Halteelementes 54 derart korrespondiert, dass die zweite Bremsbacke 50 um einen Winkel W3, wie er in Figur 3 angedeutet ist, verschwenkt werden kann. Auch dieser Winkel W3 kann beispielsweise bis zwischen +/- 1° und +/- 5° gewählt sein. Das erste Halteelement 52 und das zweite Halteelement 54 sind wiederum über Schraubmittel (nicht gezeigt) so miteinander verbunden, dass ein Verschwenken der zweiten Bremsbacke 50 um den Winkel W3 möglich ist.

Im Unterschied zu der Befestigung der ersten Bremsbacke 40 an dem ersten Bremszangenteil 34 kann die zweite Bremsbacke 50 über eine Verstelleinheit 90, vorliegend eine hydraulische Verstelleinheit, axial nach oben und unten bewegt werden. Hierfür verfügt die Verstelleinheit 90 über einen inneren Kolben 91, welcher mit dem zweiten Halteelement 54 mechanisch gekoppelt ist. Wird der Kolben 91 über ein an dem Anschluss 92 zugeführtes Druckmittel angehoben, so führt dies dazu, dass das zweite Halteelement 54 ebenfalls angehoben wird und das erste Halteelement 52 mit der zweiten Bremsbacke 50 mitnimmt. Die zweite Bremsbacke 50 kann deshalb in Richtung der ersten Bremsbacke 40 zu bewegt werden.

Um ein mit dieser erläuterten Bremseinrichtung 20 versehenes Fahrzeug abzubremsen, muss die Verstelleinheit 90 in Figur 3 nach oben bewegt werden, so dass sich diese an einem Schienenteil einer Schiene 10 einer Achterbahn oder ähnlichem festklemmen können. Die Schiene 10 kann hierfür einen zwischen die Bremsbacken 40, 50 eintauchenden Bremsstrang 11 aufweisen. Ist dieser Bremsstrang 11 leicht verkippt oder neigt das Fahrzeug etwas in Bezug zu diesem Bremsstrang 11, können vorteilhafterweise die beiden Bremsbacken 40, 50 eine leichte Kippbewegung entsprechend der Verschwenkwinkel W2, W3 ausführen, so dass weiter eine optimale Verklemmung und damit ein optimales Bremsen des Fahrzeuges gewährleistet ist.

Wie aus den Figuren 1 bis 3 deutlich erkennbar ist, befinden sich die beiden Bremsbacken 40, 50 im Ruhezustand der Bremseinrichtung in verhältnismäßig weit geöffnetem Zustand. Die beiden Bremsbacken 40, 50 können beispielsweise zwischen 10 mm und 30 mmm zueinander beabstandet sein. Dies hat den großen Vorteil, dass das Fahrzeug im ungebremsten Zustand große Unebenheiten der Schiene 10 überbrücken kann, ohne dass eine der Bremsbacken 40, 50 an dem Bremsstrang 11 der Schiene 10 reibt.

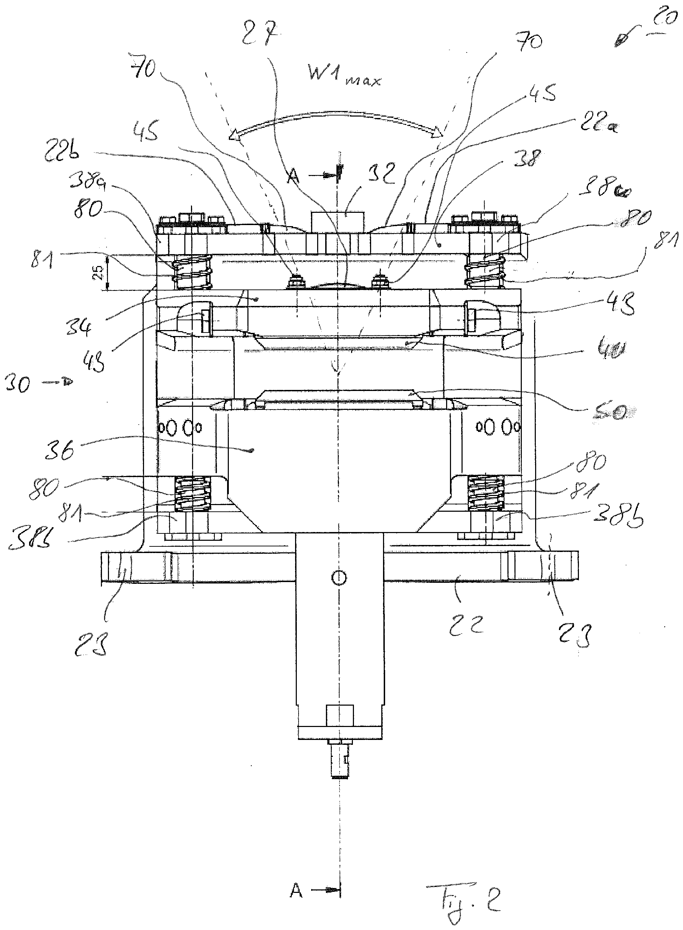

Aufgrund der dargestellten Konstruktion der Bremseinrichtung 20 mit dem erwähnten Schwenkbolzen 24 und der um den Schwenkbolzen 24 herum drehbar angeordneten Bremszangenkonsole 38 ist neben einem Verschwenken der einzelnen Bremsbacken 40, 50 auch ein Verschwenken des gesamten Bremsbackenträgers 30 um den Schwenkbolzen 24 möglich. Das Verschwenken ist aufgrund der Gestaltung des Anschlagbolzens 32, der Puffer 70 und der Anschläge 22a und 22b des Bremsträgers 22 allerdings begrenzt, beispielsweise auf +/- 10°. In Figur 2 ist die Bremseinrichtung 20 mit unverschwenktem Bremsbackenträger 30 gezeigt.

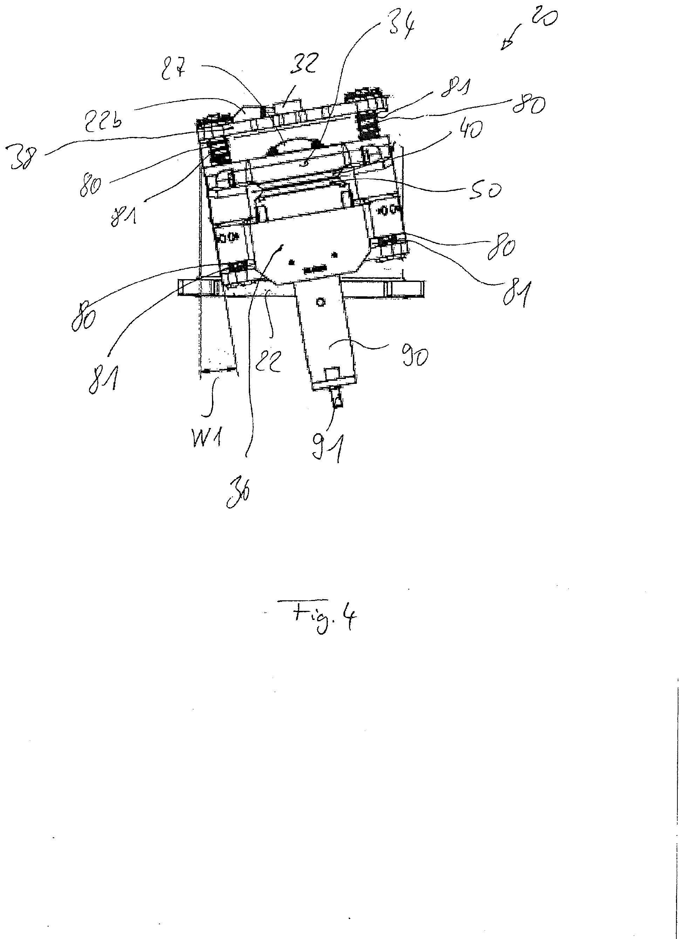

Figur 4 zeigt die Bremseinrichtung 20 mit Blick auf die Klemmseite und damit von vorn, wobei diese jetzt um einen Verschwenkwinkel W1 nach rechts verschwenkt ist. Zugleich zeigt Figur 4 die Bremseinrichtung 20 im Bremszustand, also bei aufeinander zu bewegten Bremsbacken 40, 50.

Wenngleich im Ausführungsbeispiel immer davon die Rede war, dass die Bremseinrichtung zwei Bremsbacken 40, 50 aufweist, liegt es auch im Rahmen der Erfindung nur eine einzige Bremsbacke zu verwenden, welche zum Bremsen gegen einen Bremsstrang 11 der Schiene 10 gedrückt wird.

### Bezugszeichenliste

- 10: Schiene
- 11: Bremsstrang

- 20: Bremseinrichtung
- 22: Bremsträger
- 22a: erster Anschlag
- 22b: zweiter Anschlag
- 23: Bohrungen
- 24: Schwenkbolzen
- 25: zylindrische Außenkontur
- 26: Schrauben
- 27: Flansch
- 29: Gleitring

- 30: Bremsbackenträger
- 32: Anschlagbolzen
- 34: erstes Bremszangenteil
- 34a: Anlagefläche
- 34b: Anlagefläche
- 36: zweites Bremszangenteil
- 38: Bremszangenkonsole
- 38a: obere Arme von 38
- 38b: untere Arme von 38

- 40: erste Bremsbacke
- 42: erstes Halteelement
- 43: Schraube
- 44: zweites Halteelement
- 45: Schraube
- 50: zweite Bremsbacke
- 52: erstes Halteelement
- 54: zweites Halteelement

- 70: Pufferelement

- 80: Bolzen
- 81: Feder

- 90: Verstelleinheit
- 91: Kolben
- 92: Anschluss

- W1: Verschwenkwinkel
- W2: Verschwenkwinkel
- W3: Verschwenkwinkel
- W1ₘₐₓ: maximaler Verschwenkwinkel W1

- A-A: Schnitt

## Patentansprüche

1. Vergnügungsparkvorrichtung mit einem schienengeführten Streckenverlauf sowie mit mindestens einem an der Schiene (10) geführten Fahrzeug, das eine Bremseinrichtung (20) mit einer oder zwei an einem Bremsbackenträger (30) befestigten Bremsbacken (40, 50) aufweist zum Bremsen bzw. Festklemmen des Fahrzeugs an einer Stelle des schienengeführten Streckenverlaufes im Bremsfall, wobei die Bremseinrichtung (20) einen Bremsträger (22) aufweist, welcher am Fahrzeug feststehend angeordnet ist, und Schwenkmittel vorgesehen sind, durch welche der Bremsbackenträger (30) und/oder zwei Bremsbacken (40, 50) in Bezug zum feststehenden Bremsträger (22) verschwenkbar sind, **dadurch gekennzeichnet, dass** der Bremsbackenträger (30) ein erstes Bremszangenteil (34) zur Halterung der ersten Bremsbacke (40) und ein zweites Bremszangenteil (36) zur Halterung der zweiten Bremsbacke (50) aufweist, wobei das erste Bremszangenteil (34) und das zweite Bremszangenteil (36) jeweils schwimmend in einer Bremszangenkonsole (38) gelagert sind.

2. Vergnügungsparkvorrichtung nach Anspruch 1,
**dadurch gekennzeichnet, dass** der Bremsbackenträger (30) parallel zur Schiene (10) auf dem schienengeführten Streckenverlauf verschwenkbar ist.

3. Vergnügungsparkvorrichtung nach Anspruch 1 oder 2,
**dadurch gekennzeichnet, dass** der Bremsbackenträger (30) um mindestens annähernd +/- 5° bis +/- 15° in und entgegensetzt zur Fahrtrichtung des Fahrzeugs auf dem schienengeführten Streckenverlauf verschwenkbar ist.

4. Vergnügungsparkvorrichtung nach einem der Ansprüche 1 bis 3,
**dadurch gekennzeichnet, dass** auf dem Bremsträger (22) ein Schwenkbolzen (24) feststehend verbunden ist, dass der Schwenkbolzen (24) eine zylindrische Außenkontur (25) mit einem umlaufenden und hervorspringenden Flansch (27) aufweist und dass der Bremsbackenträger (30) den umlaufenden Flansch (27) ringförmig umgreift und über einen Gleitring (29) an der zylindrischen Außenkontur (25) des Schwenkbolzens (24) verdrehbar gelagert sitzt.

5. Vergnügungsparkvorrichtung nach einem der Ansprüche 1 bis 4,
**dadurch gekennzeichnet, dass** der Bremsträger (22) einen ersten Anschlag (22a) und einen zweiten Anschlag (22b) aufweist, an welchen ein Anschlagsbolzen (32) des Bremsbackenträgers (30) entsprechend eines vorgegebenen maximalen Verschwenkwinkels (W1ₘₐₓ)anschlägt.

6. Vergnügungsparkvorrichtung nach Anspruch 5,
**dadurch gekennzeichnet, dass** zwischen dem Anschlagbolzen (32) des Bremsbackenträgers (30) und dem ersten Anschlag (22a) einerseits und dem zweiten Anschlag (22b) des Bremsträgers (30) andererseits jeweils ein Pufferelement (70) angeordnet ist.

7. Vergnügungsparkvorrichtung nach Anspruch 6,
**dadurch gekennzeichnet, dass** sowohl durch das erste Bremszangenteil (34) als auch zweite Bremszangenteil (36) jeweils federgelagerte Bolzen (80, 82) zur schwimmenden Lagerung vorgesehen sind, wobei die Bolzen (80, 82) an der Bremszangenkonsole (38) gehalten werden.

8. Vergnügungsparkvorrichtung nach einem der Ansprüche 1 bis 7,
**dadurch gekennzeichnet, dass** sowohl das erste Bremszangenteil (34) als auch das zweite Bremszangenteil (36) jeweils ein Halteelement (42, 52) aufweist, an dem die erste und zweite Bremsbacke (40, 50) jeweils befestigt, wobei jedes Halteelement (42, 52) auf einer zur jeweiligen Bremsbacke (40, 50) abgewandten Hauptfläche eine gewölbte Außenkontur aufweist, welche formschlüssig mit einem zweiten Halteelement (44, 54), das am jeweiligen Bremszangenteil festgelegt ist, derart korrespondiert, dass die jeweilige Bremsbacke (40, 50) schwenkend gelagert ist.

9. Vergnügungsparkvorrichtung nach Anspruch 8,
**dadurch gekennzeichnet, dass** jede der beiden Bremsbacken (40, 50) quer zur Fahrtrichtung des Fahrzeuges in einem Winkel von etwa +/- 1° bis etwa +/- 5° verschwenkbar ist.

10. Vergnügungsparkvorrichtung nach einem der Ansprüche 1 bis 9,
**dadurch gekennzeichnet, dass** die zwei Bremsbacken (40, 50) im Ruhezustand der Bremseinrichtung (20) und damit bei geöffneter Bremseinrichtung (20) einen Abstand von > 20 mm, vorzugsweise < 30 mm zueinander aufweisen.

11. Vergnügungsparkvorrichtung nach einem der Ansprüche 1 bis 10,
**dadurch gekennzeichnet, dass** eine der Bremsbacken (40, 50) axial mittels einer Verstelleinheit (90) verstellbar ist.

12. Vergnügungsparkvorrichtung nach Anspruch 10,
**dadurch gekennzeichnet, dass** die Verstelleinheit (90) eine Hydraulikeinheit oder eine elektromagnetisch betätigbare Verstelleinheit (90) ist.

## Claims

1. Amusement park device comprising a rail-guided track layout as well as at least one vehicle guided on the rail (10), which has a braking device (20) with one or two brake pads (40, 50) fastened to a brake pad carrier (30) for braking or firmly clamping the vehicle at a point on the rail-guided track layout in the event of braking, wherein the braking device (20) has a brake carrier (22), which is arranged fixed on the vehicle, and pivoting means are provided by which the brake pad carrier (30) and/or two brake pads (40, 50) are pivotable with respect to the fixed brake carrier (22), **characterised in that** the brake pad carrier (30) has a first brake caliper part (34) for holding the first brake pad (40) and a second brake caliper part for holding the second brake pad (50), wherein the first brake caliper part (34) and the second brake caliper part (36) are in each case supported floating in a brake caliper bracket (38).

2. Amusement park device according to claim 1, **characterised in that** the brake pad carrier (30) is pivotable parallel to the rail (10) on the rail-guided track layout.

3. Amusement park device according to claim 1 or 2, **characterised in that** the brake pad carrier (30) is pivotable by at least approximately +/-5° to +/-15° in the direction of travel of the vehicle on the rail-guided route course and in the opposite direction.

4. Amusement park device according to one of claims 1 to 3, **characterised in that** a pivot pin (24) is fixedly connected to the brake carrier (22), that the pivot pin (24) has a cylindrical external contour (25) with a circumferential and projecting flange (27), and that the brake pad carrier (30) surrounds the circumferential flange (27) in an annular manner and is rotationally supported and seated by means of a sliding ring (29) on the cylindrical external contour (25) of the pivot pin (24).

5. Amusement park device according to one of claims 1 to 4, **characterised in that** the brake carrier (22) has a first stop (22a) and a second stop (22b) on which a stop pin (32) of the brake pad carrier (30) impinges at a predetermined maximum pivot angle (W1ₘₐₓ).

6. Amusement park device according to claim 5, **characterised in that** a buffer element (70) is arranged in each case between the stop pin (32) of the brake pad carrier (30) and the first stop (22a) on the one hand and the second stop (22b) of the brake carrier (30) on the other hand.

7. Amusement park device according to claim 6, **characterised in that** spring-loaded pins (80, 82) for floating support are provided in each case both by the first brake caliper part (34) and also the second brake caliper part (36), wherein the pins (80, 82) are held on the brake caliper bracket (38).

8. Amusement park device according to one of claims 1 to 7, **characterised in that** both the first brake caliper part (34) and also the second brake caliper part (36) in each case has a holding element (42, 52) on which the first and second brake pad (40, 50) are in each case fastened, wherein each holding element (42, 52) has on a main area facing away from the respective brake pad (40, 50) a curved external contour which corresponds in a form-fitting manner to a second holding element (44, 54) fixed on the respective brake caliper part in such a way that the respective brake pad is supported a pivotably.

9. Amusement park device according to claim 8, **characterised in that** each of the two brake pads (40, 50) is pivotable transversely with respect to the direction of travel of the vehicle at an angle of approximately +/-1° to approximately +/-5°.

10. Amusement park device according to one of claims 1 to 9, **characterised in that** the two brake pads (40, 50) in the idle state of the brake device (20), and thus with the brake device (20) open, have a spacing of >20 mm, preferably <30 mm, relative to one another.

11. Amusement park device according to one of claims 1 to 10, **characterised in that** one of the brake pads (40, 50) is axially adjustable by means of an adjustment unit (90).

12. Amusement park device according to claim 10, **characterised in that** the adjustment unit (90) is a hydraulic unit or an electromagnetically operated adjustment unit (90).

## Revendications

1. Dispositif pour parc d'attraction comportant un circuit sur rails ainsi qu'au moins un véhicule guidé sur les rails (10) qui comporte un dispositif de freinage (20) comprenant une ou deux mâchoire (s) de frein (40, 50) fixée (s) à un support de mâchoires de frein (30) pour permettre de freiner ou de bloquer le véhicule dans un emplacement du circuit sur rails lors d'un freinage, le dispositif de freinage (20) comprenant un support de frein (22) qui est monté fixe sur le véhicule, et, il est prévu des moyens de pivotement permettant de faire pivoter le support des mâchoires de frein (30) et/ou deux mâchoires de frein (40, 50) par rapport au support de frein fixe (22),
**caractérisé en ce que**
le support des mâchoires de frein (30) comporte une première partie de pince de frein (34) permettant de maintenir la première mâchoire de frein (40) et une seconde partie de pince de frein (36) permettant de maintenir la seconde mâchoire de frein (50), la première partie de pince de frein (34) et la seconde partie de pince de frein (36) étant respectivement montées flottantes dans une console de pince de frein (38).

2. Dispositif pour parc d'attraction conforme à la revendication 1,
**caractérisé en ce que**
le support des mâchoires de frein (30) peut pivoter parallèlement au rail (10) sur le circuit sur rails.

3. Dispositif pour parc d'attraction conforme à l'une des revendications 1 et 2,
**caractérisé en ce que**
le support des mâchoires de frein (30) peut pivoter sur le circuit sur rails d'au moins approximativement +/-5° à +/-15° dans la direction de déplacement du véhicule et dans la direction opposée à celle-ci.

4. Dispositif pour parc d'attraction conforme à l'une des revendications 1 à 3,
**caractérisé en ce que**
sur le support de frein (22) est montée solidairement une broche de pivotement (24), ayant un contour externe cylindrique (25) muni d'une bride périphérique en saillie (27), et le support des mâchoires de frein (30) vient annulairement en prise autour de la bride périphérique (27) et est monté mobile en rotation par l'intermédiaire d'une bague glissante (29) sur le contour externe cylindrique (25) de la broche de pivotement (24).

5. Dispositif pour parc d'attraction conforme à l'une des revendications 1 à 4,
**caractérisé en ce que**
le support de frein (22) comporte une première butée (22a) et une seconde butée (22b) que vient frapper une broche de butée (32) du support des mâchoires de frein (30) conformément à un angle de pivotement maximum prédéfini (W1ₘₐₓ).

6. Dispositif pour parc d'attraction conforme à la revendication 5,
**caractérisé en ce qu'**
entre la broche de butée (32) du support des mâchoires de frein (30) et la première butée (22a) d'une part et la seconde butée (22b) d'autre part du support de frein (30) est respectivement monté un élément tampon (70).

7. Dispositif pour parc d'attraction conforme à la revendication 6,
**caractérisé en ce qu'**
au travers de la première partie de pince de frein (34) ainsi que de la seconde partie de pince de frein (36) il est respectivement prévu des broches (80, 82) montées élastiquement pour permettre un montage flottant, et les broches (80, 82) sont maintenues sur la console des pinces de frein (38).

8. Dispositif pour parc d'attraction conforme à l'une des revendications 1 à 7,
**caractérisé en ce que**
la première partie de pince de frein (34) ainsi que la seconde partie de pince de frein (36) comportent respectivement un élément de retenue (42, 52) sur lequel sont respectivement fixées la première mâchoire de frein (40, 50) et la seconde mâchoire de frein (40, 50), et chaque élément de retenue (42, 52) à sur une surface principale située à l'opposé de la mâchoire de frein respective (40, 50) un contour externe bombé qui correspond par une liaison par la forme à un second élément de retenue (44, 54) qui est fixé sur la partie de pince de frein respective, de sorte que les mâchoires de frein respectives (40, 50) soient montées pivotantes.

9. Dispositif pour parc d'attraction conforme à la revendication 6,
**caractérisé en ce que**
chacune des deux mâchoires de frein (40, 50) peut pivoter selon un angle d'environ +/-1° à environ +/- 5° transversalement à la direction de déplacement du véhicule.

10. Dispositif pour parc d'attraction conforme à l'une des revendications 1 à 9,
**caractérisé en ce que**
lorsque le dispositif de freinage (20) est à l'arrêt, et par suite ouvert, les deux mâchoires de frein (40, 50) sont à une distance > 20mm, de préférence < 30mm l'une par rapport à l'autre.

11. Dispositif pour parc d'attraction conforme à l'une des revendications 1 à 10,
**caractérisé en ce que**
l'une des mâchoires de frein (40, 50) peut être réglée axialement au moyen d'une unité de réglage (90).

12. Dispositif pour parc d'attraction conforme à la revendication 10,
**caractérisé en ce que**
l'unité de réglage (90) est une unité hydraulique ou une unité de réglage (90) à commande électromagnétique.
